# EUROPEAN PATENT APPLICATION

(11) **EP 4 007 228 A1**
(43) Date of publication of application: **01.06.2022**
(21) Application number: 20383033.6
(22) Date of filing: 27.11.2020
(51) Int. Cl.: H04L 29/06, H04L 29/08

(54) **SYSTEM AND METHOD FOR LIVE MEDIA STREAMING**

(71) Applicant: Telefonica Digital España, S.L.U., 28013 Madrid (ES)
(72) Inventor: Salguero Castellano, Francisco Borja, 28013 Madrid (ES); Casas Barrado, Manuel, 28013 Madrid (ES); Rampas Vázquez, Francisco Antonio, 28013 Madrid (ES); Paris, Guillaume, 28013 Madrid (ES); Martín Suárez, David, 28013 Madrid (ES); Martínez García, Santiago, 28013 Madrid (ES)
(74) Representative: Carlos Hernando, Borja

(57) **Abstract**

A system and method for live media streaming are provided. The system comprises at least one client computing device (40) configured to connect to a streaming event, and a multimedia content platform (30). The multimedia content platform (30) is configured to receive at least one multimedia content from at least one multimedia source (10), generate one or more commands (35) in a given text format defining in real time how and when the received multimedia content has to be streamed to the client computing device (40) connected to the streaming event, and transmit the generated command(s) (35) to the client computing device (40) through a WebRTC-based signaling channel (50). The client computing device (40) upon reception of the command(s) (35) is configured to process the command/commands and update as a result their associated content viewer part.

## Description

### Technical Field

The present invention generally relates to broadcasting and online streaming. More in particular, the invention relates to a system and to a method for live media streaming.

### Background of the Invention

Web Real-Time Communication (WebRTC) is a fully peer-to-peer technology for the real-time exchange of video, audio and data between different communicating endpoints, which requires an intermediary server to exchange signaling information between them. WebRTC introduces real time communication as native capabilities of web browsers. For native clients, like Android and IOS applications, a library is available that provides the same functionality.

One of the characteristics WebRTC applications differ from other communication services is the fact that there is no standard protocol defined for client-server signaling. This translates into fewer semantics and syntax constraints, which enables a more advanced usage of the WebRTC signaling channel, which can be tailored to fit the specific requirements of the application.

The most intuitive signaling means for WebRTC applications is the transmission of JavaScript Object Notation (JSON) objects over the best available bi-directional transport.

JSON is a syntactic subset of JavaScript and has the advantage of being natively interpreted by web browsers. Since all data structures and state information in web applications are stored in objects that have a direct unambiguous mapping to JSON, it is undoubtedly the format requiring the least effort for encoding, parsing and processing. The other advantage of using JSON is that it does not impose any semantic on applications, thus allowing the communicating endpoints to exchange any kind of information (i.e. information for establishing media connections, as well as custom events specific of the application logic).

Nowadays, however, there's no standard signaling solution for WebRTC streamed events to allow controlling in real time the behavior and representation of multiple ingested multimedia sources, graphics and multimedia elements at the same time, that could be represented as part of a streamed event on WebRTC application clients.

A WebRTC stream event may involve different multimedia sources (e.g.: webcams or cameras), graphics (e.g.: text captions, banners) and other multimedia and interactive elements (e.g.: polls, audio and video files) which need to be represented on the clients as part of a stream event.

One of the main problems Content Producers and Editors have is the lack of flexible and easy processes for being able to control the production and behavior in real time of all the multimedia elements used as part of a WebRTC stream event.

Since WebRTC signaling channel can be used not only for negotiating and establishing the media connections between the server and client, but also to exchange any type of information between them, there's an important opportunity to leverage it for defining a new flexible and extensible protocol for the server-client information exchange to describe the behavior and representation the various multimedia elements and sources should have at each moment on the applications clients connected to the stream event.

There are known some patents or patent applications in this field.

Some of this prior art focuses on systems to add audio comments remotely (e.g., audio in different languages) and synchronize them with a given event of live video streaming and that viewers receive the corresponding live video. For example, the US20200120363A or the US20200059687A1.

In particular, the US20200120363A discloses a method comprising receiving from each of a plurality of commentator applications corresponding commentary information relating to video content from at least one video source, sending at least portions of the commentary information received from each of the commentator applications to one or more other ones of the commentator applications, and generating commented video content based at least in part on the commentary information received from the commentator applications. The commented video content is provided to one or more servers of a content delivery network for delivery to one or more viewer devices. The receiving and sending are illustratively implemented in a media serverthrough interaction of the media server with web browsers of respective commentator devices that implement the commentator applications. In one possible operating scenario, the media processor receives video content from the live media server. The video content includes video of a live event as captured by the video camera and may additionally include associated surround audio from multiple microphones deployed at the live event. The video content is delivered from the live media server to the media processor via the network, illustratively using a high-speed connection based on a protocol such as RTMP or web real-time communications (WebRTC).

US20200059687A1 discloses a method comprising receiving video content from at least one video source, timestamping frames of the video content to generate respective first timestamps, and providing the frames in association with the respective first timestamps to a commentator application. The method further includes receiving audio content from the commentator application in association with respective second timestamps, combining the frames of the video content with the received audio content based at least in part on the first timestamps and the second timestamps to generate commented video content, and providing the commented video content to one or more servers of a content delivery network for delivery to one or more viewer devices. A plurality of distinct streams of audio content may be received from respective distinct commentator applications, and the frames of the video content combined with the plurality of distinct streams of audio content to generate the commented video content.

On the other hand, other prior art documents such as the EP2672704A1 focus on enabling the simultaneous sharing between devices of multiple audio/video feeds from the different cameras available to these devices, and also at controlling, at a device level, which of the received feeds are to be displayed on that device at any given time. More in particular, the EP2672704A1 relates to a method for video image sharing and control that comprises activating video communication between electronic devices. Transmission of multiple video feeds is controlled using multiple cameras from a first electronic device. One or more embodiments use features of WebRTC for acquiring and communicating streaming data.

Hence, the prior art is focused on sharing the audio/video of different cameras of the devices among the devices themselves and not at controlling at a platform level through a given command interface how the various media contents should be streamed to each of the clients connected to a streaming session.

New systems and methods for live media streaming are therefore needed.

### Description of the Invention

The invention provides a multimedia content platform/server that defines a Video Production Command Interface (VPCI) to continuously exchange commands for defining and updating in real time the behavior, representation and timing of the various multimedia contents that are streamed to each of the users/clients connected to a streaming session. The VPCI is designed as a simple but flexible and extensible ad-hoc protocol which couples a data-interchange format such as JSON with a signaling protocol establishing and maintaining a reliable bi-directional channel with the multimedia content platform/server, and also takes care of the command exchanges that define the way the streamed content (multimedia sources, graphics and interactive elements) are to be viewed on the connected clients.

Embodiments of the present invention provide, according to a first aspect, a system for live media streaming. The system comprises at least one client computing device adapted to connect to a streaming event, and a multimedia content platform adapted to: receive multimedia content from at least one multimedia source; generate one or more commands in a given text format, particularly JSON, defining in real time how and when the received multimedia content has to be streamed to the client computing device connected to the streaming event; and transmit the generated command(s) to the client computing device through a WebRTC-based signaling channel. The client computing device upon reception of the command(s) is further adapted to process the command/commands and update as a result their associated content viewer part.

In an embodiment, the command(s) is/are generated by a service element implemented on the multimedia content platform. Moreover, the multimedia source can be selected via a multimedia control interface implemented on the multimedia content platform.

The multimedia content can comprise WebRTC and non-WebRTC multimedia content. The non-WebRTC can include video and/or audio files. The multimedia source can include a webcam, a camera and/or a remote streamed video source, among others.

Embodiments of the present invention also provide, according to a second aspect, a method for live media streaming. The proposed method comprises receiving, by a multimedia content platform, at least one multimedia content from at least one multimedia source; generating, by the multimedia content platform, one or more commands in a given text format defining in real time how and when the received multimedia content has to be streamed to a client computing device; transmitting, by the multimedia content platform, the generated command(s) to the client computing device through a WebRTC-based signaling channel, the client computing device being connected to a streaming event; processing, by the client computing device, the command/commands and updating their associated content viewer part as a result.

In a particular embodiment, the given text format is JSON.

In an embodiment, the command(s) is/are generated by a service element implemented on the multimedia content platform, the service element comprising matching each action performed through a multimedia control interface implemented on the multimedia content platform with the command(s).

In an embodiment, the service element, once an action is performed on the multimedia content platform, comprises analyzing the action and computing the difference between a previous status of the multimedia content streamed to the client computing device with a new status of the multimedia content, the new status being associated to a new action performed on the multimedia content platform.

In an embodiment, the multimedia source is selected via the multimedia control interface implemented on the multimedia content platform.

In an embodiment, the multimedia content platform further receives other multimedia and interactive elements such as text captions, banners, polls, social hashtags, etc.

In an embodiment, the command(s) besides defining how and when the received multimedia content has to be streamed further indicate a position on a screen of the client computing device where a particular camera/web cam multimedia source should appear.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

The present invention allows producing new types of video stream contents and programs on the cloud, in a much faster and easier way, and streaming them to social networks or to any other platform supporting RTMP(S).

The present invention will reduce the complexity and time spent on the content production, edition, moderation and monitoring processes, and also transforms how an audience will see a multimedia service provider, by offering branded, changeable, reusable and personalized video stream contents in a secure and controlled platform environment.

Moreover, the present invention allows easily increasing and managing the number of collaborators that can participate as part of the streamed content and their viewing permissions.

### Brief Description of the Drawings

The previous and other advantages and features will be more fully understood from the following detailed description of embodiments, with reference to the attached figures, which must be considered in an illustrative and non-limiting manner, in which:
Fig. 1 shows a simplified high level diagram of a multimedia content platform implementation that defines/provides VPCI to control the representation and behavior of different ingested multimedia sources on the platform for a particular stream event.
Figs. 2-5 illustrate different examples of the format of the commands that can be defined by the present invention, according to different embodiments.

### Detailed Description of the Invention and of Preferred Embodiments

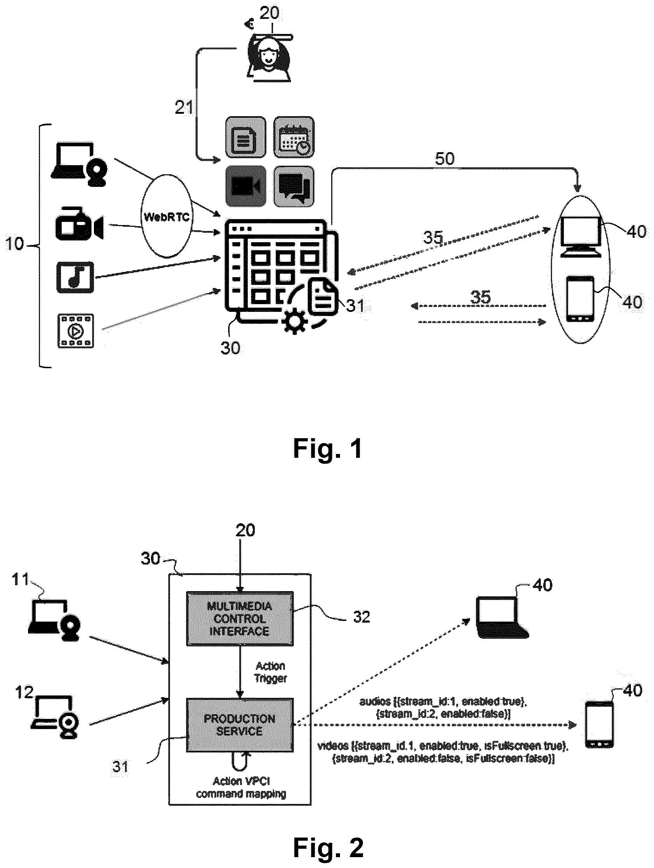

Fig. 1 illustrates an embodiment of the invention's architecture for live media streaming. Particularly, the invention defines a Video Production Command Interface (VPCI) that particularly consists on a JSON based server-client signaling protocol for WebRTC, that allows a multimedia content platform 30 on the Internet to continuously exchange commands 35 for defining and updating in real time the behavior, representation and timing of the various media contents that are streamed to each of the clients 40 connected to a streaming session.

The VPCI consists of a real time command interface that enables the production and control of multimedia content on the cloud. This command interface has the objective of defining which of the ingested multimedia elements (i.e. video/audio sources) on the multimedia content platform 30 has to be represented on the client's screen, how and their behavior. More in particular, VPCI can be seen as a temporal snapshot of each of the available assets that the multimedia content platform 30 has available for a particular stream event.

In an embodiment, the invention works in the following way: all possible different behaviors and representations for each of the multimedia assets available to be used for a particular stream event are defined and specified in the form of commands 35, so that these commands 35 can be used at any moment during the stream event. Once the stream event starts, these commands 35 are triggered in real time by the content producer's/director's actions 21 performed on a multimedia control interface 32, which in this case, has been implemented as part of the multimedia content platform 30.

The multimedia control interface 32 is a user interface that allows a content producer/director computing device 20 to control in real time which of the available multimedia assets (i.e. which video/audio sources or elements 10 and which representation of them) should be streamed at each moment as part of a particular stream event. The content producer/director computing device 20 can subsequently add, edit or remove any of the available multimedia sources or elements 10 and/or update their behavior and representation (in other words, perform actions 21) in real time, as part of the produced live or scheduled content stream on the multimedia content platform 30. The stream event can also be finished by the content producer computing device 20 at any time, by making use of the multimedia control interface 32.

The triggered commands 35 are sent through the signaling channel available in the WebRTC protocol 50 to the web applications connected to the stream session. These applications receive the commands 35, process them and update as a result their associated content viewer part in the web application. The result is that the multimedia content is represented on the web applications as indicated by the commands 35 sent.

The multimedia content platform 30 particularly comprises a service element, or production service, 31 that plays a key role in the mapping between the actions 21 performed by the content producer computing device 20 at a multimedia control interface level, and their corresponding matching commands 35.

The production service 31, once an action is performed on the multimedia content platform 30, analyzes it and calculates the difference between the previous status of the multimedia content stream being sent to the clients 40 and the new target one, according to the new action performed on the multimedia content platform 30.

In an embodiment, the production service 31 maps the identified updates into commands 35 that are sent to the clients 40 connected to the stream event, so that they can update their representation of the produced multimedia content stream sent by the multimedia content platform 30.

Some of the behaviors that can be communicated through the commands 35 are: mute those video/audio feeds that should not be represented on the client 40; unmute those video/audio feeds that should be represented on the client 40; show the corresponding multimedia element (video, audio, graphics, images, polls...) taking into account their specified behavior in the commands 35.

In an embodiment, the production service 31 acts as a (VPCI) server, which generates the necessary commands 35 that map to each new action 21, taking into account which was the previous status of all the multimedia sources, elements and graphics available on the streamed event before this action 21 took place, so that they can be updated according to a new action 21 performed by the content producer computing device 20 at that moment.

Multimedia sources 10 may be ingested into the multimedia content platform 30 as WebRTC streams (in the case of webcams and cameras or remote streamed video sources) or directly as video/audio files.

The multimedia content platform 30 can include itself other tools as well to allow the content producer computing device 20 to ingest other multimedia and interactive elements such as text captions, banners, polls or social hashtags, to be used as part of the produced event stream.

Connected clients 40 can have different purposes. For example they may correspond to collaborators who connect through their laptop or mobile devices to a streaming event in order to participate on it, or they may correspond to specific web applications for previewing, monitoring or moderating the streaming event. These applications may implement, in turn, their own specific presentation layer for the streamed event sent by the platform 30 (e.g. apply a custom CSS or format, hide some of the multimedia elements from the streamed event that are not relevant for that specific web application etc.)

Hence, present invention allows the content producer computing device 20 to control and determine in real time, via the multimedia content platform 30, which video sources should be represented on the clients' screens and when, and activate their associated audio when necessary, according to their expected behavior. In a similar way, the representation and behavior of graphics and the rest of multimedia elements available on a particular stream event can be fully controlled through VPCI at a platform/server level.

Fig. 2 illustrates an example of the format of a (VPCI) command 35. For the purpose of this example, the following identifiers, multimedia sources and element are used: Camera or webcam 11-ID1; Camera or webcam 12-ID 2. In this scenario, it is assumed that at this moment, the content producer computing device 20 has decided to put a webcam 11 in live as part of the stream event being transmitted to the connected clients 40. This action 21 would result in the production service 31 generating a command 35 with the JSON structure shown in the figure, which would be then sent to the clients 40 connected to the stream event.

In Fig. 2, the command 35 indicates that Camera 11 should have its audio and video enabled, and be shown in full screen on the client 40. Camera 12, on the other hand, should have its audio muted and its video disabled at this moment.

The previous example shows the format of JSON VPCI commands 35 that control the behavior of the received cameras/webcam sources 11, 12 (i.e. WebRTC streams sent from a laptop or mobile device that may correspond to the presenter or collaborators of the event) for a stream event. However, other multimedia elements that could be used as well as part of the stream event, such as graphics, banners, polls, texts etc. may have special characteristics and behaviors. For example, some of them may be designed to have the capacity to be represented predominantly on top of other video sources on the client's viewer; others may imply muting automatically the rest of audio sources so that the attention is focused on them. These types of behaviors and other similar ones can also be defined through the corresponding commands 35.

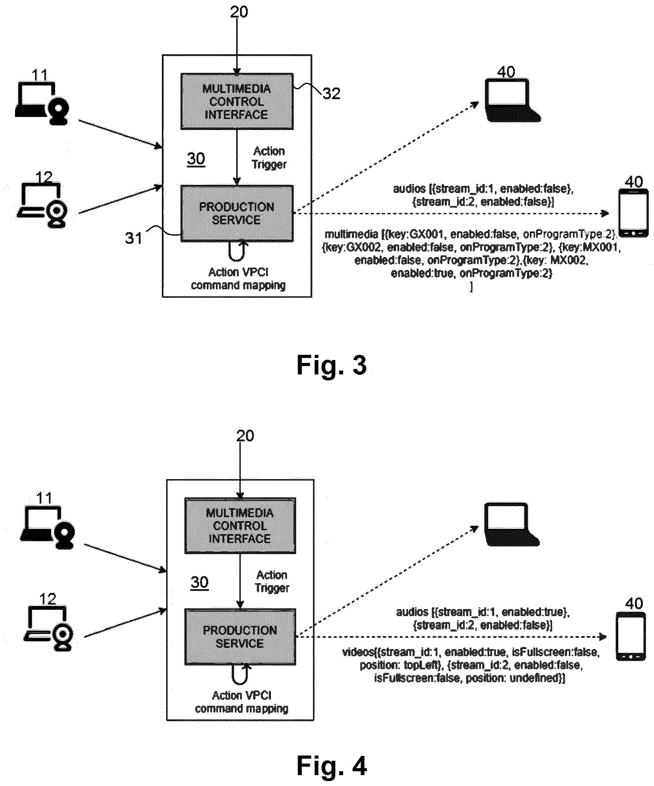

In another embodiment, it is assumed that the following multimedia elements (and their corresponding IDs) are available to be used as part of the stream event: Graphic - ID GX001; Graphic - ID GX002; Multimedia - ID MX001; Jingle - ID MX002. In this embodiment it is assumed that the content producer computing device 20 has decided now to put in live the Jingle (ID: MX002) multimedia element as part of the previous stream event which already has Camera 1 in live, and that the desired behavior that has been defined for the Jingle element is to mute the audio of the rest of multimedia sources that may be in live while the Jingle is live. This means the audio of Camera 11 should be muted in this case. This action would result in the production service 31 generating a command 35 with the JSON structure shown in Fig. 3, which would be then sent to the clients 40 connected to the stream event.

In the embodiment above, the command 35 is indicating that the graphic elements with id "GX001" and "GX002" should not be shown at this moment on the client's screen. The same happens with the multimedia element with id "MX001", since "enabled" parameter has the value "false". The multimedia element with id "MX002", on the other hand, has "true" as value for its "enabled" parameter, indicating that it should be represented on the client's screen at this moment. The way it should be represented on the screen and its behavior is given by the "On ProgramType" parameter, which will be described next.

In the previous example, there's also another command 35 associated to the action of putting the Jingle element in live as part of the stream event. It indicates the audio of both Camera 11 and Camera 12 sources should remain muted while this Jingle is in live. This is the expected behavior of the Jingle multimedia element that it has been assumed for this example, and this shows how this behavior is defined through the commands 35.

As stated before, graphics and multimedia elements can have different behaviors when represented on the screen, and these are also defined as part of the commands 35. For example, certain multimedia elements may need to be represented on the background layer, or on the foreground, instead, on top of the rest. Some of them may also have other implications such as muting the other multimedia sources/elements present on the screen at that same moment.

The different behaviors of the multimedia elements can be reflected on the "On Program Type" parameter contained in the commands 35. This parameter uniquely defines the behavior associated to a particular multimedia element. Examples of behaviors of a multimedia element that can be reflected on the "on Program Type" parameter are the following: "element to be shown on the background layer", "element to be represented in full screen", "element to be shown in catch (pip) mode" etc.

In an embodiment, the behavior mapping table used for the "On Program Type" parameter is the following:

| **onProqramType** | **Value** | **Applies to** | **Result** |
|---|---|---|---|
| pip | 1 | Videos | Multimedia represented as PicturelnPicture together with the rest of ingested cameras/collaborators. The audio of the multimedia element is set to 80% |
| fullscreen | 2 | Videos | Multimedia represented at full screen, on top of the rest video sources (ingested cameras/collaborators) and mutes them |
| stationld | 3 | Images & Videos | Multimedia represented on top of the rest of multimedia elements and ingested cameras. It will always be visible and represented together with the rest of the multimedia elements. |
| background | 4 | Images & Videos | Multimedia represented at the lower layer. It will only be visible on those representations where the background is visible. |
| queue | 5 | Videos | Multimedia represented at full screen, on top of the rest of ingested cameras/collaborators, but their audio is not muted. |
| webmGraphic | 6 | Videos & Audios | Multimedia represented on top of the rest of ingested cameras/collaborators, but since they contain an alpha transparent layer, cameras and collaborators can still be seen behind the webmGraphic. |
| jingle | 7 | Audios | Multimedia is not represented, but acts as a sound effect on top of the rest of audio sources. |

Continuing with the previous command example, the behavior expected on the following multimedia element can be described as:

```
               "multimedia": [
               {
                   "key": "MX002",
                   "enabled": true,
                 },"onProgramType": 2,
                  ],
```

The above command 35 indicates that the multimedia element with id "MX002" should be represented on the screen in full screen, as indicated in the "On Program Type" parameter value, which is 2.

In order to extend the functionality or behavior that a certain command 35 represents, new parameters can be added to the JSON structure of that particular command 35. In this way, any new action performed through the multimedia control interface 32 and any new required behaviors/representations of the multimedia elements available for a stream event can be mapped and interpreted through VPCI both at a platform 30 and client 40 level.

Taking the example previously used for describing the format of a command 35, the latter, in an embodiment, can be extended, for example, by adding a position parameter, which represents the expected position on the screen where a particular ingested camera/web cam source 11, 12, should appear. Assuming that the content producer computing device 20 has decided to put in live the ingested multimedia source Camera 11 with id "1", the command format including position information for the video of Camera 11 would be as shown in the Fig. 4.

In the embodiment of Fig. 4, the command 35 sent would be indicating that the audio from camera "11" should be enabled and its video shown on the top left side of the screen, at that moment. The other ingested camera 12, with id "2", on the hand, should have its audio and video disabled; therefore the position value for this camera 12 is not relevant since it won't appear on the client screen.

A similar format could be used as well in order to extend the command 35 that defines the behavior of a particular multimedia element. In this case, an expected "position" parameter can be added to further describe the representation of a multimedia element through VPCI.

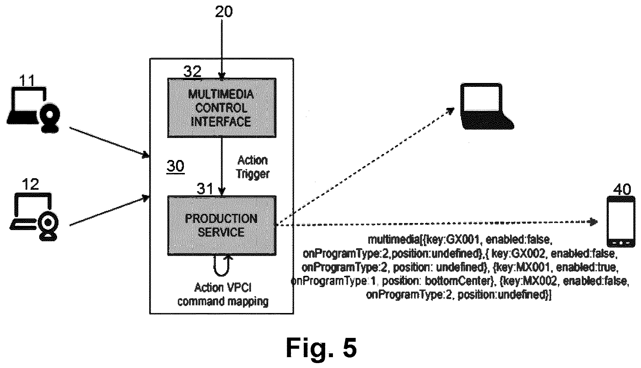

Let's assume that again the following multimedia elements are available as part of the stream event: Graphic - ID GX001; Graphic - ID GX002; Multimedia - ID MX001; Jingle - ID MX002. A position parameter will be added to the command structure used to describe the multimedia elements available for the event. For the purposes of this example, let's assume the content producer computing device 20 has decided that the multimedia element with ID "MX001"should be shown on a bottom center position of the screen whenever it goes live. Fig. 5 shows the structure of the command 35 generated by the production service 31 in the multimedia content platform 30, when the content producer computing device 20 decides to put the multimedia element with ID "MX001" in live, as part of the stream event.

In the embodiment of Fig. 5, the command 35 indicates that the multimedia element "MX001" should be represented, in pip mode ("OnProgramType" value 1, according to the mapping table shown before corresponds to a pip mode representation of the multimedia element), and on the bottonCenter side of the screen, as indicated by its "position" parameter value.

The two available graphics "GX001", "GX002" and the other multimedia element available "MX002" for this stream event should not be represented on the screen at this moment, since their "enabled" parameter value is "false", therefore its position parameter value is not relevant.

In a similar way as has been described in the previous two examples, the defined set of commands 35 can be extended in an easy and flexible way at any time, providing endless opportunities of describing the necessary behavior and representation that cameras, webcams, multimedia elements, graphics and any multimedia source 10 being used as part of a stream event should have on the clients 40 connected to that particular stream event.

Another additional feature that can be achieved through the usage of the commands 35 is the ability to control and generate different simultaneous visualizations of the same streamed event, for each of the connected clients applications. This behavior could be implemented as part of the production service 31, which in this case could map each action 21 performed by the content producer computing device 20 to different commands 35 for each of the applications connected to the event, therefore potentially generating different simultaneous visualizations of the same stream event for each of the clients 40 connected.

Therefore, present invention comprises a JSON based markup language which can generally be used by any multimedia content production platform or system on the Internet, in order to control in real time the viewing behavior of each client connected to the produced streaming session. Likewise, the present invention makes every ingested multimedia sources, graphics and interactive elements to be fully controllable in real time, according to their form of representation, behavior and timings defined in the form of commands, which can be sent to the connected clients at any moment.

The commands can be processed and interpreted by each client in order to act upon them, often by customizing and updating the viewer part of the connected web apps that implement the client, according to these commands. Likewise, the commands sent may be different for each client, therefore allowing generating different personal, specific and engaging stream views for each client. Thus, with the present invention it is possible to generate own, unique viewing user experiences based on the same streaming session and content produced. Through VPCI, the video and multimedia content can be viewed and updated in real time on the users' devices, without introducing time lag in the rendering process. In conclusion, the present invention allows making any available multimedia content, video source, graphic and interactive element to be intelligent, secure and fully controllable both on the produced stream and on the viewers connected to the produced stream session.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with data processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Nonvolatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, data processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A system for live media streaming, comprising:
at least one client computing device (40) configured to connect to a streaming event; and
a multimedia content platform (30),
wherein the multimedia content platform (30) is configured to:
receive at least one multimedia content from at least one multimedia source (10, 11, 12);
generate one or more commands (35) in a given text format defining in real time how and when the received multimedia content has to be streamed to the client computing device (40) connected to the streaming event; and
transmit the generated command(s) (35) to the client computing device (40) through a Web Real-Time Communication, WebRTC,-based signaling channel (50); wherein the client computing device (40) upon reception of the command(s) (35) is configured to process the command/commands and update as a result their associated content viewer part.

2. The system of claim 1, wherein the given text format comprises JSON.

3. The system of claim 1 or 2, wherein the command(s) being generated by a service element (31) implemented on the multimedia content platform (30).

4. The system of any of the previous claims, wherein the multimedia source (10, 11, 12) being selected via a multimedia control interface (32) implemented on the multimedia content platform (30).

5. The system of any one of the previous claims, wherein the multimedia content comprises non-WebRTC multimedia content including video and/or audio files.

6. The system of any one of the previous claims, wherein the multimedia content comprises WebRTC multimedia content, and the multimedia source (10, 11, 12) comprises a webcam, a camera and/or a remote streamed video source.

7. A method for live media streaming, comprising:
receiving, by a multimedia content platform (30), at least one multimedia content from at least one multimedia source (10, 11, 12);
generating, by the multimedia content platform (30), one or more commands (35) in a given text format defining in real time how and when the received multimedia content has to be streamed to a client computing device (40);
transmitting, by the multimedia content platform (30), the generated command(s) (35) to the client computing device (40) through a Web Real-Time Communication, WebRTC,-based signaling channel (50), the client computing device (40) being connected to a streaming event;
processing, by the client computing device (40), the command/commands (35) and updating their associated content viewer part as a result.

8. The method of claim 7, wherein the given text format comprises JSON.

9. The method of claim 7 or 8, wherein the command(s) (35) being generated by a service element (31) implemented on the multimedia content platform (30), the service element (31) comprising matching each action (21) performed by a content producer computing device (20) at a multimedia control interface (32) implemented on the multimedia content platform (30) with the command(s) (35).

10. The method of claim 9, wherein the service element (31), once an action (21) is performed on the multimedia content platform (30), comprises analyzing the action (21) and computing the difference between a previous status of the multimedia content streamed to the client computing device (40) with a new status of the multimedia content, the new status being associated to a new action (21) performed on the multimedia content platform (30).

11. The method of claim 7, wherein the multimedia source (10, 11, 12) being selected via a multimedia control interface (32) implemented on the multimedia content platform (30).

12. The method of any one of the previous claims 7 to 11, further comprising receiving, by the multimedia content platform (30), other multimedia and interactive elements including text captions, banners and/or polls or social hashtags.

13. The method of any one of the previous claims 7 to 12, wherein the multimedia content comprises non-WebRTC multimedia content including video and/or audio files.

14. The method of any one of the previous claim 7 to 13, wherein the multimedia content comprises WebRTC multimedia content, the multimedia source (10, 11, 12) comprising a webcam, a camera and/or a remote streamed video source.

15. The method of any of the previous claims 7 to 14, wherein the command(s) (35) besides defining how and when the received multimedia content has to be streamed further indicate a position on a screen of the client computing device (40) where a particular camera/web cam multimedia source (11, 12) should appear.
